# EUROPEAN PATENT APPLICATION

(11) **EP 4 506 832 A1**
(43) Date of publication of application: **12.02.2025**
(21) Application number: 24158454.9
(22) Date of filing: 19.02.2024
(51) Int. Cl.: G06F 16/332

(54) **METHOD AND SYSTEM FOR PROVIDING REAL-TIME ASSISTANCE TO USERS USING GENERATIVE ARTIFICIAL INTELLIGENCE (AI) MODELS**

(30) Priority: 10.08.2023 IN 202341053819; 09.02.2024 US 202418437658
(71) Applicant: Infosys Limited, 560-100 Bangalore (IN)
(72) Inventor: AHMED, Syed, 560100 Bangalore (IN); CHAKRABORTY, Ritarshi, 560100 Bangalore (IN)
(74) Representative: Finnegan Europe LLP

(57) **Abstract**

This disclosure relates to a method and a system for providing real-time assistance to a user using a generative AI model. The method includes receiving by the generative AI model, a user query corresponding to an activity. The user query includes one or more multi-modal inputs. The generative AI model is pretrained based on a set of predefined policies associated with an entity. The method further includes processing in real-time, by the generative AI model, the user query to determine a type of the user query based on the activity. The method further includes providing, by the generative AI model, assistance to the user in real-time by generating instructions in response to the processing of the user query.

## Description

### Technical Field

This application claims the benefit of India Patent Application No. 202341053821, filed August 10, 2023, which is incorporated by reference in its entirety.

This disclosure relates generally to Artificial Intelligence (AI), and more particularly to a method and a system for providing real-time assistance to a user using a generative AI model.

### Background

In an era where instant response is the norm, waiting for resolutions to problems is becoming a thing of the past. Consumers today have high expectations when it comes to customer support. They expect rapid, effective solutions to their concerns without having to deal with long phone conversations, email exchanges, or browsing complex support websites. Further, with advancement in technology, real-time assistance tools (for example: live chat supports, chatbots, co-browings and screen sharing with support agents, etc) steps in to meet these expectations, providing immediate solutions to consumer concerns, and hence redefining the way organizations interact with their consumers, making problem-solving faster and more efficient than ever before.

However, since these existing real-time assistance tools heavily real on technology, therefore these assistance tools often faces challenges, such as technical glitches, downtime, user resistance, privacy concerns, scalibility issues, lack of personalization, and the like. For example, consider a scenario where a user of a software is getting some error and he has taken multiple measures to resolve the error, but none of it worked. So, the user engages an assistant bot to guide him step by step on how to solve the error. However, in the above scenario none of the existing real-time assistance tools provide effective guidance to the user by generating step by step instructions in real-time on how to solve the error by pointing right options that the user needs to select, as well as giving him instructions using voice commands, highlighting the area on the screen that the user needs to select, or by taking control. In other words, currently none of the existing real-time assessment tools provide guidance to consumers by engaging the consumers through multiple mediums like live screen sharing, audio, and text and troubleshooting their issues in real time in an interactive fashion.

There is, therefore, a need in the present state of art, for techniques to address the problem of assissting users in real-time in resolving their queries.

### SUMMARY

In one embodiment, a method for providing real-time assistance to a user using a generative Artificial Intelligence (AI) model is disclosed. In one example, the method may include receiving, by the generative AI model, a user query corresponding to an activity. It should be noted that the user query may include one or more multi-modal inputs. The generative AI model may be pretrained based on a set of predefined policies associated with an entity. The method may include processing in real-time, by the generative AI model, the user query to determine a type of the user query based on the activity. The method may include providing, by the generative AI model, assistance to the user in real-time by generating instructions in response to the processing of the user query.

In another embodiment, a system for providing real-time assistance to a user using a generative Artificial Intelligence (AI) model is disclosed. In one example, the system may include a processor and a computer-readable medium communicatively coupled to the processor. The computer-readable medium may store processor-executable instructions, which, on execution, may cause the processor to receive, by the generative AI model, a user query corresponding to an activity. It should be noted that the user query may include one or more multi-modal inputs. The generative AI model may be pretrained based on a set of predefined policies associated with an entity. The processor-executable instructions, on execution, may further cause the processor to process in real-time, by the generative AI model, the user query to determine a type of the user query based on the activity. The processor-executable instructions, on execution, may further cause the processor to provide, by the generative AI model, assistance to the user in real-time by generating instructions in response to the processing of the user query.

In yet another embodiment, a non-transitory computer-readable medium storing computer-executable instructions for providing real-time assistance to a user using a generative Artificial Intelligence (AI) model is disclosed. In one example, the stored instructions, when executed by a processor, cause the processor to perform operations including receiving, by the generative AI model, a user query corresponding to an activity. It should be noted that the user query may include one or more multi-modal inputs. The generative AI model may be pretrained based on a set of predefined policies associated with an entity. The operations may further include processing in real-time, by the generative AI model, the user query to determine a type of the user query based on the activity. The operations may further include providing, by the generative AI model, assistance to the user in real-time by generating instructions in response to the processing of the user query.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, explain the disclosed principles.
FIG. 1 illustrates a block diagram of an environment for providing real-time assistance to a user using a generative Artificial Intelligence (AI) model, in accordance with an exemplary embodiment of the present disclosure.
FIG. 2 illustrates a block diagram of a server configured for providing real-time assistance to a user, in accordance with an exemplary embodiment of the present disclosure.
FIG. 3 illustrates a block diagram of a system configured for providing real-time assistance to a user using a generative AI model, in accordance with an exemplary embodiment of the present disclosure.
FIG. 4 illustrates a flow diagram of an exemplary process for providing real-time assistance to a user using a generative AI model, in accordance with an exemplary embodiment of the present disclosure.
FIG. 5 illustrates a flow diagram of an exemplary process of generating instructions corresponding to a user query using a generative AI model, in accordance with an exemplary embodiment of the present disclosure.
FIG. 6 is a block diagram that illustrates a system architecture of a computer system for providing real-time assistance to a user using a generative AI model, in accordance with an exemplary embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

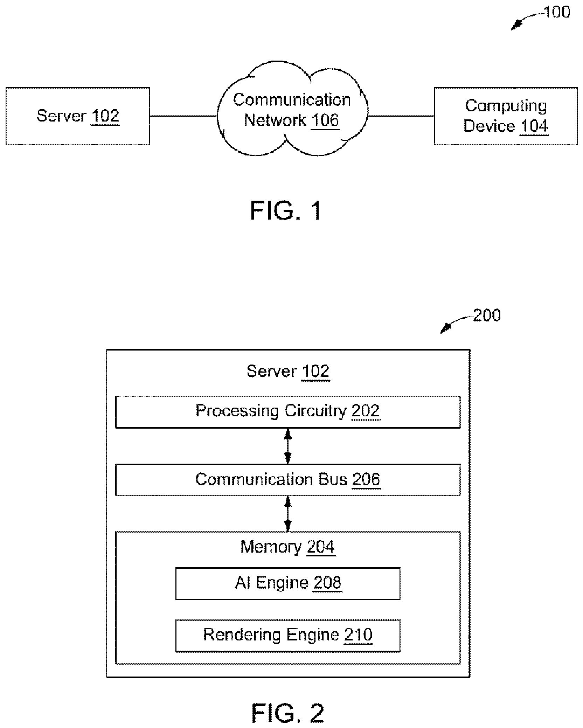

FIG. 1 is a diagram that illustrates an environment 100 for providing real-time assistance to a user using a generative Artificial Intelligence (AI) model, in accordance with an exemplary embodiment of the present disclosure.

The environment 100 may include a server 102 configured for providing real-time assistance to the user using the generative AI model. In particular, the generative AI model may be hosted on the server 102 to provide assistance to the user in real-time. Examples of the server 102 may include, but are not limited to, a server, an application server, a smartphone, a laptop, a desktop, a tablet, and the like. As known to a person skilled in the art, the generative AI model may be referred to as a model that is designed to answer user queries and generate new data or content (text, images, audio, and the like). The generative AI model has capabilities to answer user queries and produce new and original content that may be used in various applications, such as content generation, creative tasks, data synthesis, and the like.

The generative AI model uses unsupervised and semi-supervised machine learning algorithms to analyse a query received from the user and guides him accordingly to resolve the query. Examples of the generative AI model include, but are not limited to, a Generative Pretrained Transformer (GPT-3), a Large Language Model (LLM), a foundation model, a Generative Adversarial Network (GAN), a variational autoencoder (VAE), a Deep Belief Network (DBN), a Recurrent Neural Network (RNN). In some embodiments, the generative AI model may be an ensembled model.

It should be noted that the generative AI model may be pretrained based on a set of predefined policies associated with an entity. In particular, the generative AI model may be pretrained specific to the entity to adhere to the set of predefined policies of the entity. As will be appreciated, the generative AI model may be pretrained specifically for the entity to provide real-time assistance to users associated with the entity. Examples of the entity may include any business entity (for example, a technology industry, a finance industry, a healthcare industry, a food industry, and the like) that provides customer services, service management, live agent services, and the like.

Further, the set of predefined policies may be defined by the entity based on their organizational requirements. In particular, each of the set of predefined policies may be defined by important members (such as members of the board) of the entity based on the requirements of the entity. For example, when the entity is a technology industry, then the set of predefined policies may include providing real-time assistance to access and operate an application owned by the entity, providing real-time assistance to access and operate a cloud storage owned by the entity, providing real-time assistance to users (e.g., developers or testers) while developing and testing an application, and the like. As will be appreciated, the above-listed entities, and the set of predefined policies associated with each entity are exemplary only and are used for ease of explanation. However, the generative AI model may be configured for any business entity based on its associated predefined policies.

Further, in order to provide the real-time assistance to the user, initially, the generative AI model may receive a user query corresponding to an activity. The user may access the generative AI model via a computing device 104. The computing device 104 may be a user device. Examples of the computing device 104 may include, but are not limited to, a smartphone, a tablet, a desktop, and the like. In other words, the user may provide the user query as an input to the generative AI model via the computing device 104. In an embodiment, the generative AI model may be integrated with the computing device 104. As will be appreciated, the generative AI model may correspond to a generative AI-powered live assistant bot.

In an embodiment, the user of the computing device 104 may access the generative AI model hosted on the server 102 via a communication network 106. In particular, the computing device 104 may interact with the server 102 via the communication network 106. In addition, the set of predefined policies associated with the entity may be stored within a database (not shown) of the server 102. Examples of the communication network 106 may include, but are not limited to, a wireless fidelity (Wi-Fi) network, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, and a combination thereof. In an embodiment, the communication network 106 may facilitate data exchange between the computing device 104 and the server 102.

Further, the user query may include one or more multi-modal inputs. In other words, the user query received as an input from the user may be in form of the one or more multi-modal inputs. The one or more multi-modal inputs may include at least one of a live screen display, a live screen activity display, a text, an audio, a video, or an image. Upon receiving the user query as the input, the generative AI model may be configured to process the user query in real-time. The generative AI model may process the user query to determine a type of the user query based on the activity. The type of user query may be, for example, a navigational query, a transactional query, an informational query, a general query, and the like. In addition, the generative AI model may process the user query to determine a type of the one or more multi-modal inputs included within the user query. For this, the generative AI model may employ one or more processing techniques, such as voice processing, image processing, user keystroke or clicks processing, or screen activity processing, and the like.

By way of an example, consider a scenario where a user may be performing a payment of items added to a cart in a shopping website (e.g., ABC website). In this scenario, the entity may be a technology and marketing industry. Further, the set of predefined policies for this entity may be, for example, providing assistance to users of the ABC website during shopping, suggesting items to the users during shopping based on their preferences, providing assistance to the users during transactions, and the like. In current scenario, suppose the activity being performed by the user may be performing the payment via an option of a Unified Payment Interface (UPI) option for a UPI application (e.g., XYZ application) that he might be using. However, while performing the payment, the user might not be able to find the option of the UPI application (e.g., XYZ application) that he is using.

In this scenario, the user may provide a user query, for example, 'how to make payment on the ABC website using the XYZ application' to the generative AI model. The user may provide the user query as an audio, for example, by using a mic option available to the user on the ABC website, via an input/output unit (not shown) of the computing device 104. Upon receiving the user query, the generative AI model may process the user query in real-time to determine the type of user query based on the activity. For example, based on the activity of performing the payment, the type of the user query `how to make payment on the ABC website using the XYZ application', may be determined as the transactional query. Moreover, based on processing of the user query, the generative AI model may determine the type of the multi-modal input included within the user query, i.e., the audio.

Upon determining the type of the user query, the generative AI model may be configured to generate instructions in response to the processing of the user query. The generated instructions may provide the assistance to the user in real-time. In an embodiment, the instructions may be at least one multi-modal instruction. The at least one multi-modal instruction may include, but is not limited to, an on-screen control, an on-screen guided instruction, a textual instruction, and an audio instruction. In continuation to above example, upon determining the type of the user query of performing the payment, the generative AI model may generate a first instruction, for example, a notification with a message to select `a payment method option' may be generated and rendered to the user. In some embodiment, the first instruction generated by the generative AI model may be the on-screen guided instruction, i.e., highlighting of 'the payment method option'.

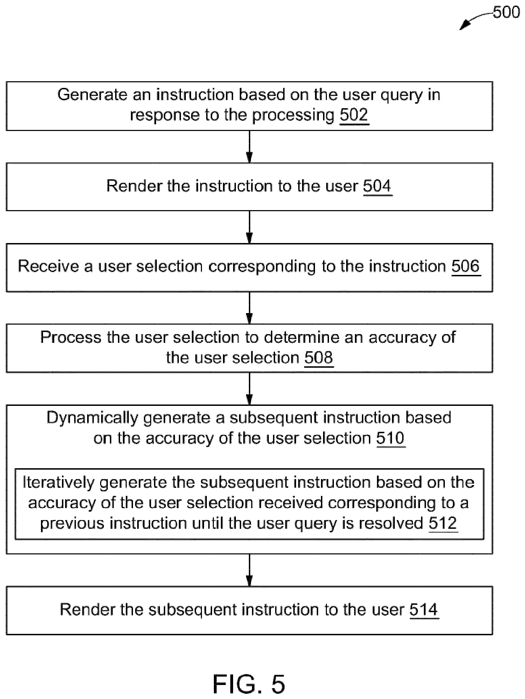

Further, once the user selects 'the payment method option' correctly, then a subsequent instruction (i.e., a second instruction), for example, 'select a payment method' may be generated and rendered to the user. In an embodiment, if the user selects an incorrect option, e.g., `select delivery address', then a corrective action may be generated and rendered to the user. For example, the corrective action may be a notification displaying a message `select a correct option, i.e., the payment method option'. It should be noted that, the generative AI model may be configured to iteratively generate the subsequent query, until the user query is resolved. The subsequent query may be generated based on the accuracy of a user selection received corresponding to a previous instruction. A method of generating the instructions is further explained in detail in FIG. 5.

Consider another scenario, where a user may encounter difficulties connecting his user device (i.e., the computing device 102) to a Virtual Private Network (VPN) of his entity, i.e., a company in which he is currently working. After multiple attempts, the user realizes that he needs assistance to resolve this issue. For this, he reaches out to the company's help desk where the generative AI model may be configured. In particular, the generative AI model may be hosted on the server 102 (i.e., the company's help desk). Further, the user may interact with the generative AI model configured at the server 102 via the computing device 104 through the communication network 106.

Once the user opens the generative AI model (e.g., the generative AI-powered live assistant bot) and engages with the generative AI model, the user may be provided with an option to share his screen activity (i.e., the live screen activity of the computing device 104) with the generative AI model. Upon selecting the option of the live screen activity, the user is immediately guided to options that he should select by highlighting the options on the screen (i.e., the on-screen guided instruction), as well as by giving the audio instructions. The instructions may be generated until the issue of the user is resolved. However, in the current scenario, if the user is still unable to connect to the VPN, the generative AI model may provide him with an option of giving the on-screen control to the generative AI model to resolve the issue. The above technique of providing real-time assistance to the user is further explained in detail in conjunction with FIGS. 2 - 6.

FIG. 2 is a block diagram 200 that illustrates a server 102 configured for providing real-time assistance to a user, in accordance with an exemplary embodiment of the present disclosure. FIG. 2 is explained in conjunction with FIG. 1. The server 102 may include a processing circuitry 202, and a memory 204 communicatively coupled to the processing circuitry 202 via a communication bus 206.

The memory 204 may store various data that may be captured, processed, and/or required by the server 102. The memory 204 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The memory 204 may also store processor-executable instructions. The processor-executable instructions, when executed by the processing circuitry 202, may cause the processing circuitry 202 to implement one or more embodiments of the present disclosure such as, but not limited to, receiving a user query corresponding to an activity, processing in real-time the user query to determine a type of the user query, and provide assistance to the user by generating instructions in response to processing the user query, and the like. The memory 204 may include an AI engine 208, and a rendering engine 210. The memory 204 may also include a data store (not shown in FIG. 2) for storing data and intermediate results generated by the engines 208 and 210.

Initially, the AI engine 208 may be configured to receive a user query. The user query may be received corresponding to an activity. It should be noted that the AI engine 208 may correspond to the generative AI model. The AI engine 208 may be pretrained based on a set of predefined policies associated with an entity (i.e., any business organization). Examples of the entity may include any business entity (for example, a technology industry, a finance industry, a healthcare industry, a food industry, and the like) that provides customer services, service management, live agent services, and the like. Further, the set of predefined policies may be defined by the entity (business organizations) based on their organizational requirements. As will be appreciated, the AI engine 208 may be pretrained specifically for the entity to provide real-time assistance to users associated with the entity. Further, the user query received as an input may include one or more multi-modal inputs. The one or more multi-modal inputs may include at least one of a live screen display, a live screen activity display, a text, an audio, a video, or an image.

Upon receiving the user query, the AI engine 208 may be configured to process the user query in real-time. The user query may be processed in real-time to determine the type of the user query. The type of user query may be, for example, a navigational query, a transactional query, an informational query, or a general query. In addition, the AI engine 208 may process the user query to determine a type of one or more multi-modal inputs included within the user query received as the input. For this, the generative AI model may employ one or more processing techniques, such as voice processing, image processing, user keystroke or clicks processing, or screen activity processing, and the like.

Further, upon determining the type of the user query, the AI engine 208 may be configured to generate instructions in response to processing the user query, in order to provide assistance to the user. To provide assistance to the user, based on the processing of the user query, the AI engine 208 may generate an instruction. Once the instruction is generated, the AI engine 208 may send the generated instruction to the rendering engine 210. The rendering engine 210 may be configured to render the generated instruction to the user. Further, based on the rendered instruction, the user may perform a suitable action corresponding to the instruction. The AI engine 208 may receive the suitable action performed by the user as a user selection corresponding to the instruction. Upon receiving the user selection, the AI engine 208 may process the user selection to determine an accuracy of the user selection. The accuracy of the user selection may be determined based on a pre-defined accuracy threshold.

Further, the AI engine 208 may dynamically generate a subsequent instruction based on the accuracy of the user selection. In an embodiment, the subsequent instruction may be one of a subsequent action or a corrective action. The subsequent action may be generated when the accuracy of the user selection corresponding to a previous instruction was determined to be above the pre-defined accuracy threshold. In other words, the subsequent action may be generated when the accuracy of the user selection corresponding to the previous instruction is determined to be correct. The corrective action may be generated when the accuracy of the user selection corresponding to the previous instruction is determined to be below the pre-defined accuracy threshold. In other words, the subsequent action may be generated when the accuracy of the user selection corresponding to the previous instruction is determined to be incorrect. Further, the AI engine 208 may send the subsequent instruction to the rendering engine 210. The rendering engine 210 may render the subsequent instruction to the user. It should be noted that the subsequent instruction may be iteratively generated based on the accuracy of the previous instruction until the user query is resolved.

It should be noted that all such aforementioned engine 208 and 210 may be represented as a single module or a combination of different modules. Further, as will be appreciated by those skilled in the art, each of the engines 208 and 210 may reside, in whole or in parts, on one device or multiple devices in communication with each other. In some embodiments, each of the engines 208 and 210 may be implemented as dedicated hardware circuit comprising custom application-specific integrated circuit (ASIC) or gate arrays, off-the-shelf semiconductors such as logic chips, transistors, or other discrete components. Each of the engines 208 and 210 may also be implemented in a programmable hardware device such as a field programmable gate array (FPGA), programmable array logic, programmable logic device, and so forth. Alternatively, each of the engines 208 and 210 may be implemented in software for execution by various types of processors (e.g., the processing circuitry 202). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for providing real-time assistance to the user using the generative AI model. For example, the exemplary server 102 may provide the real-time assistance to the user by the processes discussed herein. In particular, as will be appreciated by those of ordinary skill in the art, control logic and/or automated routines for performing the techniques and steps described herein may be implemented by the server 102 either by hardware, software, or combinations of hardware and software. For example, suitable code may be accessed and executed by the one or more processors on the server 102 to perform some or all of the techniques described herein. Similarly, application specific integrated circuits (ASICs) configured to perform some, or all of the processes described herein may be included in the one or more processors on the server 102.

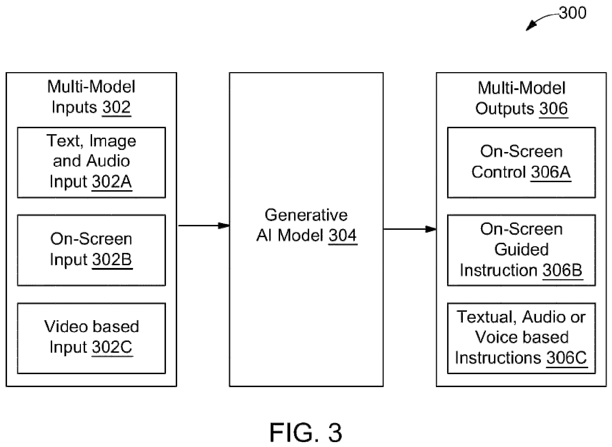

FIG. 3 is a block diagram of a system 300 configured for providing real-time assistance to a user using a generative AI model 304, in accordance with an exemplary embodiment of the present disclosure. FIG. 3 is explained in conjunction with FIGS. 1 and 2. The generative AI model 304 may correspond to the AI engine 208.

As depicted via the system 300, the generative AI model 304 may be configured to receive the user query. The user query may include the one or more multi-modal inputs. The one or more multi-modal inputs may include at least one of a live screen activity, a live screen activity display, a text, an audio, a video, or an image. As depicted via the system 100, the one or more multi-modal inputs may correspond to multi-modal inputs 302. The multi-modal inputs 302, for example may include, but are not limited to, a text, an image, or an audio input 302A, on-screen input 302B (i.e., the live screen activity, and the live screen activity display), and a video-based input 302C (i.e., the video). Further, the generative AI model 304 may process the user query received in form of the multi-modal inputs 302 to generate a corresponding multi-modal output of multi-modal outputs 306.

With reference to FIG. 1 and 2, the multi-modal outputs 306 may correspond to the instructions (i.e., the instruction and the subsequent instructions) generated in response to processing of the user query. As depicted via the present FIG. 3, the multi-modal outputs 306 may include an on-screen control 306A, an on-screen guided instruction 306B, and a textual instruction, an audio instruction, or a video instruction 306C. To generate the corresponding multi-modal output, the generative AI model 304 may process a multi-modal input of the multi-modal inputs 302 to determine the type of the multi-modal input. By way of an example, consider a scenario where the user query may be received as an image. The image may include the text. In this scenario, the user query received may be in the form of the multi-modal input 302A as it includes the image and the text. In this scenario, the generative AI model 304 may process the image and the text within the image to determine the type of the user query. The type of the user query may be, for example, a navigational query, a transactional query, an informational query, or a general query.

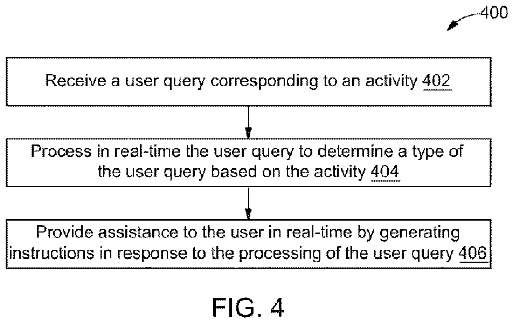

Further, upon determining the type of the user query, the generative AI model 304 may generate the instructions to provide the assistance to the user in real-time, to resolve the user query. The generated instruction may be provided as an output to the user to resolve the user query. The output may be in the form of one or more multi-modal outputs 306. For example, in continuation to above example, based on processing of the image and the text within the image, the textual instruction (i.e., the output) may be generated and rendered to the user. A method of providing assistance to the user to resolve the user query in real-time by generating the instructions is further explained in detail in conjunction with FIG. 4 and FIG. 5.

FIG. 4 is a flow diagram that illustrates an exemplary process 400 for providing real-time assistance to a user using a generative AI model, in accordance with an exemplary embodiment of the present disclosure. FIG. 4 is explained in conjunction with FIGS. 1, 2, and 3. In an embodiment, each step of the process 400 may be implemented by the generative AI model 304.

In order to provide real-time assistance to the user, initially at step 402, a user query corresponding to an activity may be received. The user query may be received by the generative AI model 304. As known to a person skilled in the art, the generative AI model 304 may be referred to as a model that is designed to answer user queries and generate new data or content (text, images, audio, and the like). Examples of the generative AI model 304 may include, but are not limited to, a Generative Pretrained Transformer (GPT-3), a Large Language Model (LLM), a foundation model, a Generative Adversarial Network (GAN), a variational autoencoder (VAE), a Deep Belief Network (DBN), a Recurrent Neural Network (RNN). In an embodiment, the user query may include one or more multi-modal inputs. The one or more multi-modal inputs may include at least one of a live screen activity, a live screen activity display, a text, an audio, a video, or an image. With reference to FIG. 3, the one or more multi-modal inputs may correspond to the multi-modal inputs 302.

It should be noted that the generative AI model 304 may be pretrained based on a set of predefined policies associated with an entity. Examples of the entity may include any business entity (for example, a technology industry, a finance industry, a healthcare industry, a food industry, and the like) that provides customer services, service management, live agent services, and the like. Further, the set of predefined policies may be defined by the entity (any business entity) based on their organizational requirements. Each of the set of predefined policies may be defined by important members (such as members of the board) of the entity based on the requirements of the entity. For example, when the entity is a technology industry, then the set of predefined policies may include providing real-time assistance to access and operate an application owned by the entity, providing real-time assistance to access and operate a cloud storage owned by the entity, providing real-time assistance to users (e.g., developers or testers) while developing and testing an application, and the like. As will be appreciated, the above-listed entities, and the set of predefined policies associated with each entity are exemplary and are used for ease of explanation.

Further, upon receiving the user query, at step 404, the user query may be processed in real-time. The user query may be processed to determine the type of the user query. The type of the user query may be, for example, a navigational query, a transactional query, an informational query, or a general query. In addition, the generative AI model 304 may process the user query to determine a type of one or more multi-modal inputs included within the user query. For this, the generative AI model 304 may employ one or more processing techniques, such as voice processing, image processing, user keystroke or clicks processing, and screen activity processing, and the like.

By way of an example, consider a scenario where a user may be creating a table within a Microsoft word file. In this scenario, the entity may be, for example, the technology industry. Further, the set of predefined policies for this industry may be, for example, providing assistance to users while using a Microsoft word application during any activity, providing assistance to users while using Microsoft excel, and the like. In current scenario, suppose the activity being performed by the user may be creating the table. While creating the table, the user may not be able to identify an option of inserting the table within a Microsoft word file. For this, the user may provide a query (i.e., the user query), for example, how to insert a table within the Microsoft word file, as an input to the generative AI model 304.

The user may provide the user query as a text input, for example, by using a keyboard and a mouse (associated with the computing device 104). Further, upon receiving the user query, the generative AI model 304 may process the user query in real-time to determine the type of the user query based on the activity. For example, based on the activity of creating the table, the type of the user query `creating the table', may be determined as the informational query. In addition, the generative AI model 304 may process the user query to determine the type of the one or more multi-modal inputs (i.e., the text) included within the user query.

Upon determining the type of the user query, at step 406, instructions may be generated in response to the processing of the user query. The instructions may be generated by the generative AI model 304. The generated instructions may provide assistance to the user in real-time to resolve the user query. In an embodiment, the instructions may be at least one multi-modal instruction. The at least one multi-modal instruction may include, but is not limited to, an on-screen control, an on-screen guided instruction, a textual instruction, and an audio instruction. With reference to FIG. 3, the at least one multi-modal instruction may correspond to a multi-modal output of the multi-modal outputs 306. A method of generating the instructions is further explained in detail in FIG. 5.

In continuation to the above example, upon determining the type of the user query of inserting the table, the generative AI model 304 may generate an instruction, for example, a textual notification with a message 'select an insert option'. The generated instruction, i.e., 'select an insert option' may be rendered to the user. In some embodiment, the instruction generated by the generative AI model 304 may be the on-screen guided instruction, i.e., highlighting of 'the insert option'. In some other embodiment, the instruction generated by the generative AI model 304 may include an audio to 'select an insert option'. In yet another embodiment, the user may provide the on-screen control to the generative AI model 304. Further, upon receiving the on-screen control, the generative AI model 304 may perform the process of inserting the table within the Microsoft word file.

Further, once the user selects 'the insert option' correctly, then a subsequent instruction for example, `click on a table button' may be generated and rendered to the user. In an embodiment, if the user selects an incorrect option, e.g., `a draw option' displayed adjacent to the insert option, then a corrective action may be generated and rendered to the user. For example, the corrective action may be a textual notification displaying a message `incorrect option selected, select the correct option (the insert option)'. It should be noted that the generative AI model 304 may be configured to iteratively generate the subsequent query, until the user query is resolved. The subsequent query may be generated based on the accuracy of a user selection received corresponding to a previous instruction. A method of generating instruction corresponding to a user query is further explained in detail in conjunction with FIG. 5.

FIG. 5 is a flow diagram that illustrates an exemplary process 500 of generating instructions corresponding to a user query using a generative AI model, in accordance with an exemplary embodiment of the present disclosure. FIG. 5 is explained in conjunction with FIGS. 1, 2, 3, and 4. In an embodiment, each step of the process 500 may be implemented by the generative AI model 304.

With reference to the FIG. 4, as mentioned via the step 406 in order to provide assistance to the user in real-time, at step 502 an instruction may be generated. The instruction may be generated based on the user query in response to the processing of the user query. Once the instruction is generated, at step 504, the instruction may be rendered to the user. Further, at step 506, a user selection corresponding to the instruction may be received. Upon receiving the user selection, at step 508, the user selection may be processed to determine an accuracy of the user selection. The accuracy of the user selection may be determined based on a pre-defined accuracy threshold.

Once the accuracy of the user selection is determined, at step 510, a subsequent instruction may be dynamically generated based on the accuracy of the user selection. In an embodiment, the subsequent instruction may be one of a subsequent action or a corrective action. The subsequent instruction may be the subsequent action when the accuracy of the user selection is above the pre-defined accuracy threshold. Further, the subsequent instruction may be the corrective action when the accuracy of the user selection is below the pre-defined accuracy threshold. It should be noted that the subsequent instruction may be iteratively generated until the user query is resolved as mentioned via step 512. Moreover, the subsequent instruction may be generated based on the accuracy of the user selection received corresponding to a previous instruction (i.e., the instruction). Further, at step 514, the subsequent instruction may be rendered to the user.

In continuation to the above example described in the FIG. 4, where the instruction (i.e., a first instruction) 'select the insert option' for the user query, i.e., 'how to insert the table within the Microsoft word file' was generated and rendered to the user. In this case, based on the first instruction rendered to the user, the user selection may be received corresponding to the first instruction. By way of an example, the user selection may be `a click on the insert option'. Upon receiving the user selection, the accuracy of the user selection, i.e., 'the click on the insert option' may be determined. The accuracy may be determined based on the pre-defined accuracy threshold. Suppose in this case, the pre-defined accuracy threshold was set as '98%'. In the first case, since the user may have clicked on the insert option based on the first instruction rendered to him. Hence, the accuracy of the user selection may be determined to be '100%', which is above the pre-defined accuracy threshold.

Further, based on the accuracy determined to be '100%', the subsequent instruction (i.e., a second instruction) may be generated and rendered to the user. The second instruction may be the subsequent action. For example, the subsequent action may be `click on the table button'. Upon rendering the second instruction, the user selection corresponding to the second instruction may be received. In other words, based on the second instruction rendered to the user, the user may perform a suitable action.

Now suppose, the user may have selected `a chart option' instead of `clicking on the table button'. In this case, the accuracy of the user selection `i.e., the chart option' may be determined to be below the pre-defined accuracy threshold, for example: '30%'. Upon determining the accuracy to be below the pre-defined accuracy threshold, the subsequent instruction (i.e., third instruction) may be generated and rendered to the user. In current case, the third instruction may be the corrective action, for example, `incorrect option selected, select the correct option by clicking on the table option'. It should be noted that the subsequent instruction may be iteratively generated until the user query of creating the table is resolved. Each instruction (i.e., the first instruction, the second instruction, and the third instruction) may be in the form of the at least one multi-modal instruction. The at least one multi-modal instruction may include the on-screen control, the on-screen guided instruction, the textual instruction, and the audio instruction.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

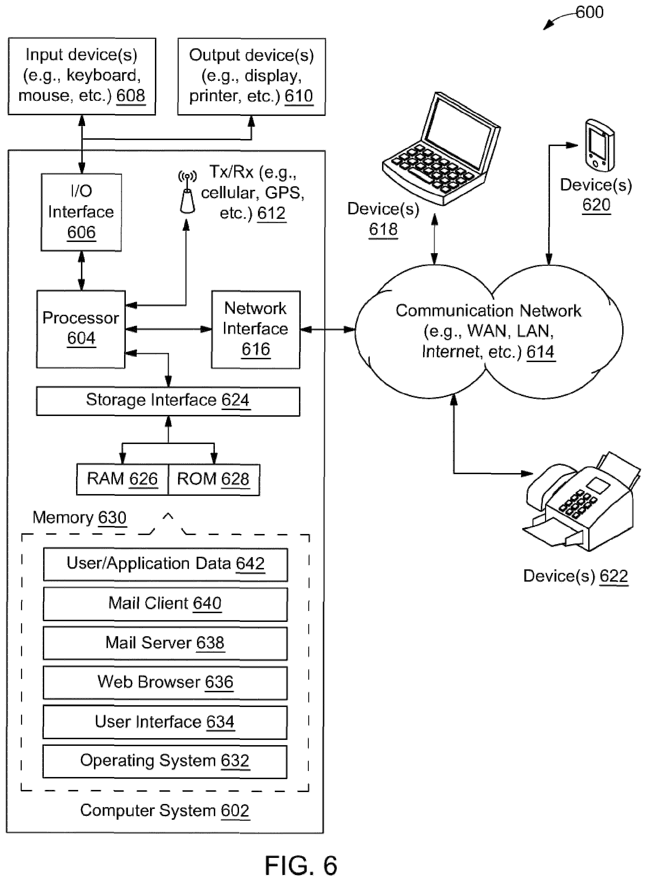

The disclosed methods and systems may be implemented on a conventional or a general-purpose computer system, such as a personal computer (PC) or server computer. FIG. 6 is a block diagram that illustrates a system architecture 600 of a computer system 602 for managing extensions of a product, in accordance with an exemplary embodiment of the present disclosure. Variations of computer system 602 may be used for implementing computing device 102 for providing real-time assistance to a user using a generative Artificial Intelligence (AI) model. Computer system 602 may include a central processing unit ("CPU" or "processor") 604. Processor 604 may include at least one data processor for executing program components for executing user or system-generated requests. A user may include a person, a person using a device, such as those included in this disclosure, or such a device itself. Processor 604 may include specialized processing units such as integrated system (bus) controllers, memory management control units, floating point units, graphics processing units, digital signal processing units, etc. Processor 604 may include a microprocessor, such as AMD^{®} ATHLOM^{®} microprocessor, DURON^{®} microprocessor OR OPTERON^{®} microprocessor, ARM's application, embedded or secure processors, IBM^{®} POWERPC^{®}, INTEL'S CORE^{®} processor, ITANIUM^{®} processor, XEON^{®} processor, CELERON^{®} processor or other line of processors. Processor 604 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 604 may be disposed in communication with one or more input/output (I/O) devices via an I/O interface 606. The I/O interface 606 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (for example, code-division multiple access (CDMA), high-speed packet access (HSPA+), global system for mobile communications (GSM), long-term evolution (LTE), WiMAX, or the like), etc.

Using I/O interface 606, computer system 602 may communicate with one or more I/O devices. For example, an input device 608 may be an antenna, keyboard, mouse, joystick, (infrared) remote control, camera, card reader, fax machine, dongle, biometric reader, microphone, touch screen, touchpad, trackball, sensor (for example, accelerometer, light sensor, GPS, gyroscope, proximity sensor, or the like), stylus, scanner, storage device, transceiver, video device/source, visors, etc. An output device 610 may be a printer, fax machine, video display (for example, cathode ray tube (CRT), liquid crystal display (LCD), light-emitting diode (LED), plasma, or the like), audio speaker, etc. In some embodiments, a transceiver 612 may be disposed in connection with processor 604. Transceiver 612 may facilitate various types of wireless transmission or reception. For example, transceiver 612 may include an antenna operatively connected to a transceiver chip (for example, TEXAS^{®} INSTRUMENTS WILINK WL1286^{®} transceiver, BROADCOM^{®} BCM4550IUB8^{®} transceiver, INFINEON TECHNOLOGIES^{®} X-GOLD 618-PMB9800^{®} transceiver, or the like), providing IEEE 802.6a/b/g/n, Bluetooth, FM, global positioning system (GPS), 2G/3G HSDPA/HSUPA communications, etc.

In some embodiments, processor 604 may be disposed in communication with a communication network 614 via a network interface 616. Network interface 616 may communicate with communication network 614. Network interface 616 may employ connection protocols including, without limitation, direct connect, Ethernet (for example, twisted pair 10/100/1000 Base T), transmission control protocol/internet protocol (TCP/IP), token ring, IEEE 802.11a/b/g/n/x, etc. Communication network 614 may include, without limitation, a direct interconnection, local area network (LAN), wide area network (WAN), wireless network (for example, using Wireless Application Protocol), the Internet, etc. Using network interface 616 and communication network 614, computer system 602 may communicate with devices 618, 620, and 622. These devices may include, without limitation, personal computer(s), server(s), fax machines, printers, scanners, various mobile devices such as cellular telephones, smartphones (for example, APPLE^{®} IPHONE^{®} smartphone, BLACKBERRY^{®} smartphone, ANDROID^{®} based phones, etc.), tablet computers, eBook readers (AMAZON^{®} KINDLE^{®} reader, NOOK^{®} tablet computer, etc.), laptop computers, notebooks, gaming consoles (MICROSOFT^{®} XBOX^{®} gaming console, NINTENDO^{®} DS^{®} gaming console, SONY^{®} PLAYSTATION^{®} gaming console, etc.), or the like. In some embodiments, computer system 602 may itself embody one or more of these devices.

In some embodiments, processor 604 may be disposed in communication with one or more memory devices (for example, RAM 626, ROM 628, etc.) via a storage interface 624. Storage interface 624 may connect to memory 630 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory 630 may store a collection of program or database components, including, without limitation, an operating system 632, user interface application 634, web browser 636, mail server 638, mail client 640, user/application data 642 (for example, any data variables or data records discussed in this disclosure), etc. Operating system 632 may facilitate resource management and operation of computer system 602. Examples of operating systems 632 include, without limitation, APPLE^{®} MACINTOSH^{®} OS X platform, UNIX platform, Unix-like system distributions (for example, Berkeley Software Distribution (BSD), FreeBSD, NetBSD, OpenBSD, etc.), LINUX distributions (for example, RED HAT^{®}, UBUNTU^{®}, KUBUNTU^{®}, etc.), IBM^{®} OS/2 platform, MICROSOFT^{®} WINDOWS^{®} platform (XP, Vista/7/8, etc.), APPLE^{®} IOS^{®} platform, GOOGLE^{®} ANDROID^{®} platform, BLACKBERRY^{®} OS platform, or the like. User interface 634 may facilitate display, execution, interaction, manipulation, or operation of program components through textual or graphical facilities. For example, user interfaces may provide computer interaction interface elements on a display system operatively connected to computer system 602, such as cursors, icons, check boxes, menus, scrollers, windows, widgets, etc. Graphical user interfaces (GUIs) may be employed, including, without limitation, APPLE^{®} Macintosh^{®} operating systems' AQUA^{®} platform, IBM^{®} OS/2^{®} platform, MICROSOFT^{®} WINDOWS^{®} platform (for example, AERO^{®} platform, METRO^{®} platform, etc.), UNIX X-WINDOWS, web interface libraries (for example, ACTIVEX^{®} platform, JAVA^{®} programming language, JAVASCRIPT^{®} programming language, AJAX^{®} programming language, HTML, ADOBE^{®} FLASH^{®} platform, etc.), or the like.

In some embodiments, the computer system 602 may implement a web browser 636 stored program component. Web browser 636 may be a hypertext viewing application, such as MICROSOFT^{®} INTERNET EXPLORER^{®} web browser, GOOGLE^{®} CHROME^{®} web browser, MOZILLA^{®} FIREFOX^{®} web browser, APPLE^{®} SAFARI^{®} web browser, etc. Secure web browsing may be provided using HTTPS (secure hypertext transport protocol), secure sockets layer (SSL), Transport Layer Security (TLS), etc. Web browsers may utilize facilities such as AJAX, DHTML, ADOBE^{®} FLASH^{®} platform, JAVASCRIPT^{®} programming language, JAVA^{®} programming language, application programming interfaces (APIs), etc. In some embodiments, the computer system 602 may implement a mail server 638 stored program component. Mail server 638 may be an Internet mail server such as MICROSOFT^{®} EXCHANGE^{®} mail server, or the like. Mail server 638 may utilize facilities such as ASP, ActiveX, ANSI C++/C#, MICROSOFT .NET^{®} programming language, CGI scripts, JAVA^{®} programming language, JAVASCRIPT^{®} programming language, PERL^{®} programming language, PHP^{®} programming language, PYTHON^{®} programming language, WebObjects, etc. Mail server 638 may utilize communication protocols such as internet message access protocol (IMAP), messaging application programming interface (MAPI), Microsoft Exchange, post office protocol (POP), simple mail transfer protocol (SMTP), or the like. In some embodiments, the computer system 602 may implement a mail client 640 stored program component. Mail client 640 may be a mail viewing application, such as APPLE MAIL^{®} mail-client, MICROSOFT ENTOURAGE^{®} mail client, MICROSOFT OUTLOOK^{®} mail client, MOZILLA THUNDERBIRD^{®} mail client, etc.

In some embodiments, the computer system 602 may store user/application data 642, such as the data, variables, records, etc. as described in this disclosure. Such databases may be implemented as fault-tolerant, relational, scalable, secure databases such as ORACLE^{®} database OR SYBASE^{®} database. Alternatively, such databases may be implemented using standardized data structures, such as an array, hash, linked list, struct, structured text file (for example, XML), table, or as object-oriented databases (for example, using OBJECTSTORE^{®} object database, POET^{®} object database, ZOPE^{®} object database, etc.). Such databases may be consolidated or distributed, sometimes among the various computer systems discussed above in this disclosure. It is to be understood that the structure and operation of the any computer or database component may be combined, consolidated, or distributed in any working combination.

Thus, the disclosed method and system try to overcome the technical problem of providing real-time assistance to a user using a generative Artificial Intelligence (AI) model. The generative AI model of the disclosed method and system may receive a user query corresponding to an activity. The user query may include one or more multi-modal inputs. The generative AI model may be pretrained based on a set of predefined policies associated with an entity. The generative AI model of the disclosed method and system may process in real-time, the user query to determine a type of the user query based on the activity. The generative AI model of the disclosed method and system may provide assistance to the user in real-time by generating instructions in response to the processing of the user query.

As will be appreciated by those skilled in the art, the techniques described in the various embodiments discussed above are not routine, or conventional, or well understood in art. The techniques discussed above provide real-time assistance to a user using a generative AI model. The above-discussed techniques may enable the user to provide the user query as the multi-modal inputs, such as a live screen activity, a live screen activity display, a text, an audio, a video, and an image. Further, the above-discussed techniques may provide real-time guidance to users to resolve their query by instructing them dynamically using multi-modal instructions, such as an on-screen control, an on-screen guided instruction, a textual instruction, and an audio instruction, through voice, text and sharing instructions on screen. Since inputs and outputs are multi-modal in nature and in real-time, thereby giving the feel of a real "live human assistant". In other words, the above-discussed techniques may enable the user to interact with the generative AI model in real time and dynamically via multiple modes (i.e., the multi-modal input and the multi-modal outputs) to solve their issue (i.e., the user query).

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described a method and system for providing real-time assistance to a user using a generative AI model. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method for providing real-time assistance to a user using a generative Artificial Intelligence (AI) model, the method comprising:
receiving, by the generative AI model, a user query corresponding to an activity, wherein the user query comprises one or more multi-modal inputs, and wherein the generative AI model is pretrained based on a set of predefined policies associated with an entity;
processing in real-time, by the generative AI model, the user query to determine a type of the user query based on the activity; and
providing, by the generative AI model, assistance to the user in real-time by generating instructions in response to the processing of the user query.

2. The method of claim 1, wherein the one or more multi-modal inputs comprise at least one of a live screen activity, a live screen activity display, a text, an audio, a video, or an image.

3. The method of claim 1, wherein providing the assistance to the user in the real-time comprises:
generating, by the generative AI model, an instruction based on the user query in response to the processing; and
rendering the instruction to the user.

4. The method of claim 3, further comprising:
receiving, by the generative AI model, a user selection corresponding to the instruction;
processing, by the generative AI model, the user selection to determine an accuracy of the user selection, wherein the accuracy of the user selection is determined based on a pre-defined accuracy threshold;
dynamically generating, by the generative AI model, a subsequent instruction based on the accuracy of the user selection; and
rendering the subsequent instruction to the user.

5. The method of claim 4, wherein the subsequent instruction is one of a subsequent action or a corrective action.

6. The method of claim 5, wherein the subsequent instruction is the subsequent action when the accuracy of the user selection is above the pre-defined accuracy threshold, and wherein the subsequent instruction is the corrective action when the accuracy of the user selection is below the pre-defined accuracy threshold.

7. The method of claim 4, further comprising:
iteratively generating, by the generative AI model, the subsequent instruction based on the accuracy of the user selection received corresponding to a previous instruction until the user query is resolved.

8. The method of claim 4, wherein each of the instruction and the subsequent instruction is at least one multi-modal instruction, and wherein the at least one multi-modal instruction comprises an on-screen control, an on-screen guided instruction, a textual instruction, and an audio instruction.

9. A system for providing real-time assistance to a user using a generative Artificial Intelligence (AI) model, the system comprising:
a processing circuitry; and
a memory communicatively coupled to the processing circuitry, wherein the memory stores processor instructions, which when executed by the processing circuitry, cause the processing circuitry to:
receive, by the generative AI model, a user query corresponding to an activity, wherein the user query comprises one or more multi-modal inputs, and wherein the generative AI model is pretrained based on a set of predefined policies associated with an entity;
process in real-time, by the generative AI model, the user query to determine a type of the user query based on the activity; and
provide, by the generative AI model, assistance to the user in real-time by generating instructions in response to the processing of the user query.

10. The system of claim 9, wherein the one or more multi-modal inputs comprise at least one of a live screen activity, a live screen activity display, a text, an audio, a video, or an image.

11. The system of claim 9, wherein, to provide the assistance to the user in the real-time, the processor instructions, on execution, further cause the processing circuitry to:
generate, by the generative AI model, an instruction based on the user query in response to the processing; and
render the instruction to the user.

12. The system of claim 11, wherein the processor instructions, on execution, further cause the processing circuitry to:
receive, by the generative AI model, a user selection corresponding to the instruction;
process, by the generative AI model, the user selection to determine an accuracy of the user selection, wherein the accuracy of the user selection is determined based on a pre-defined accuracy threshold;
dynamically generate, by the generative AI model, a subsequent instruction based on the accuracy of the user selection; and
render the subsequent instruction to the user.

13. The system of claim 12, wherein the subsequent instruction is one of a subsequent action or a corrective action.

14. The system of claim 13, wherein the subsequent instruction is the subsequent action when the accuracy of the user selection is above the pre-defined accuracy threshold, and wherein the subsequent instruction is the corrective action when the accuracy of the user selection is below the pre-defined accuracy threshold.

15. The system of claim 12, wherein the processor instructions, on execution, further cause the processing circuitry to:
iteratively generate, by the generative AI model, the subsequent instruction based on the accuracy of the user selection received corresponding to a previous instruction until the user query is resolved.

16. The system of claim 12, wherein each of the instruction and the subsequent instruction is at least one multi-modal instruction, and wherein the at least one multi-modal instruction comprises an on-screen control, an on-screen guided instruction, a textual instruction, and an audio instruction.

17. A non-transitory computer-readable medium storing computer-executable instructions providing real-time assistance to a user using a generative Artificial Intelligence (AI) model, the stored instructions, when executed by a processor, cause the processor to perform operations comprises:
receiving, by the generative AI model, a user query corresponding to an activity, wherein the user query comprises one or more multi-modal inputs, and wherein the generative AI model is pretrained based on a set of predefined policies associated with an entity;
processing in real-time, by the generative AI model, the user query to determine a type of the user query based on the activity; and
providing, by the generative AI model, assistance to the user in real-time by generating instructions in response to the processing of the user query.
